# EUROPEAN PATENT SPECIFICATION

(11) **EP 1 185 471 B1**
(45) Date of publication and mention of the grant of the patent: **01.12.2004**
(21) Application number: 00935106.5
(22) Date of filing: 24.05.2000
(51) Int. Cl.: B65G 15/34, D03D 15/00

(54) **ELASTIC CONVEYOR BELT WITH CONDUCTING FIBRES FOR THE DISCHARGE OF STATIC ELECTRICITY AND LEATHER PERCHING MACHINE COMPRISING SUCH BELT**
ELASTISCHER FÖRDERBAND MIT LEITENDEN FASERN ZUR ENTLADUNG STATISCHER ELEKTRIZITÄT SOWIE MIT EINEM SOLCHEN FÖRDERBAND VERSEHENE VORRICHTUNG ZUM GESCHMEIDIGMACHEN VON LEDER
CONVOYEUR A BANDE ELASTIQUE AVEC DES FIBRES CONDUCTRICES ASSURANT LA DECHARGE DE L'ELECTRICITE STATIQUE ET MACHINE DE TRAITEMENT DU CUIR TANNE EQUIPEE DE CETTE BANDE

(30) Priority: 27.05.1999 IT VI990109
(43) Date of publication of application: 13.03.2002
(73) Proprietor: Antoniazzi, Antonio, 36072 Chiampo (VI) (IT)
(72) Inventor: Antoniazzi, Antonio, 36072 Chiampo (VI) (IT)
(74) Representative: Bonini, Ercole
(86) International application number: PCT/EP2000/004705
(87) International publication number: WO 2000/073177

(56) References cited:
- EP-A- 0 300 176
- EP-A- 0 368 233
- GB-A- 1 429 718

## Description

The invention relates to a conveyor belt made of elastic fabric of natural or synthetic fibres.

Conveyors belts made of elastic fabric of natural or synthetic fibres are used in several productive fields, such as in the packaging or in the field of leathers' processing, but also in many other productive environments, to satisfy some production requirements.

In the leather sector the perching process is used to give back to tanned leather its elasticity and softness after going through various treatments. The process consists in beating leather repeatedly and casually with metal pegs, as leather moves through the perching machine compressed between two elastic fabrics.

In this process, it is obvious that the belt that conveys leather under the perching units must have elastic properties, to endure the repeated actions of vertical beating that the perching units perform on the belt and therefore on leather while it passes transversally before coming out of the machine.

Just because of this treatment leather accumulates static electricity due to the friction between the belt and the same leather and this electricity is the cause of a series of drawbacks.

One of these is the fact that leathers remain attached to the belt of the perching machine and are discharged with difficulty.

Moreover leathers that have accumulated static electricity discharge the same on the people who handle them, that is the operators who take them to pass on to successive treatments.

Another drawback can derive from the fact that static electricity of leather is discharged on electronic devices associated with the perching machines, such as stacking units.

All these drawbacks remain till now unsolved, for the phenomenon of static electricity is produced just during the perching operation and is therefore unavoidable to eliminate static electricity at the source with the existent technique.

Attempts carried out with the aim of discharging static electricity of the belts through the direct contact of the same belts with metallic rollers or with brushes connected to the ground, were not successful because of the high quantity of static electricity produced

EP-A-0368233 discloses a such perching machine for the treatment of leather using two elastic conveyor belts between which the leather is compressed during the perching process. But said belts have not the capability to discharge static electricity.

What has been heretofore described, is just one of the drawbacks that the known technique cannot solve in the field of transportation of materials with elastic fibres under processing. Actually, there are many sectors, besides tannery, that are registering the above mentioned drawbacks. One of these sectors notably is that of packaging, where films of synthetic materials or cellophane accumulate a large amount of static electricity and provoke several drawbacks with reference to this matter.

The purpose of the invention is to eliminate the just mentioned drawbacks.

The main objective of the invention is therefore to realize a conveyor belt with intrinsic properties able to eliminate the formation and the accumulation of static electricity both in the belt and in the objects transported by the belt itself.

It shall be noted that elastic fabrics with conducting fibres made recently their appearance as an experimental product in the fashion sector where some stylists, on the look for peculiar aesthetical and chromatic effects, tried to realize garments, with stretch or not, with carbon, copper, aluminium, silver or gold fibres.

No industrial application is known to the Applicant, above all in the sector of conveyor belts, elasticised fabrics with conducting fibres.

The present invention proposes therefore to transfer from the fashion sector to the industrial sector and specifically to that of conveyor belts the technology of elasticised fabrics with fibres made of conducting materials.

According to the content of the first claim there is proposed a conveyor belt made of elastic fabric of natural or synthetic fibres that is characterised by fibres of a conducting material helically wound around said elastic fibres in the weft and/or in the warp to allow the discharge of static electricity accumulated by said belt or by the objects transported by said belt.

The discharge of static electricity will take place through the direct contact of said conveyor belt with the feed rollers of the belt itself, rollers that are connected to the structure of the machine and that, being realised in metallic material, are electrically connected to the ground and therefore suitable to discharge static electricity.

With the aim of rendering such conducting fibres, that are added to the already elastic fabric, such as fibres of carbon, copper or aluminium, elastic, a special preparation of the conducting fibres will take place before the weaving process. Such preparation is performed with a special helical winding of the same thread, around a yarn of elastomer to allow the extension during the elastic action of the conducting thread together with the elastic belt, without breaking the conducting thread.

As hinted before, an advantageous use of the conveyor belt according to the invention, is in the perching machines that realize the beating of tanned leather through perching units.

This kind of beating takes place positioning the leathers like a sandwich between two elastic belts that move in the same direction in a perching machine, substantially one in contact with the other, with the possibility of inserting leathers between these walls in contact. Leathers inserted into this sandwich consisting of these two facing belts are subjected to the action of beating on the part of perching units.

It is in this stage, according to the traditional technique and with the currently used belts, the static electricity caused by the friction between the elasticised fabric and the leather is generated and accumulated onto the leathers.

By providing, according to the invention, the conveyor belt with fibres of a conducting material such as, carbon, copper, aluminium, titanium or any other conducting fibre, static electricity as soon as it is generated is directly discharged on the cylinders that drive the belt conveyors or on equipments added to this purpose.

Thus all the problems connected with the accumulation of static electricity are completely eliminated.

Of course, as it was already hinted, the conveyor belt according to the invention can be used with advantage in other industrial activities different from the tanning sector with the same advantages, for this invention actually eliminates the dangerous static electricity, dangerous both for the operators, and also for the possible deterioration of the manufactured articles that accumulate static electricity.

## Claims

1. Conveyor belt made of elastic fabric of natural or synthetic fibres for a perching machine for softening tanned leather having feed rollers for said conveyor belt,
**characterized by**
fibres of a conducting material helically wound around said elastic fibres in the weft and/or in the warp to allow the discharge of static electricity accumulated by said belt or by the objects transported by said belt through the direct contact of said conveyor belt with said feed rollers.

2. Conveyor belt according to claim 1, wherein said conducting material contains copper, aluminium, titanium and/or carbon.

3. Pearching machine comprising two superimposed conveyor belts according to claim 1 or 2 between which the leather to be treated is compressed during the perching process.

## Patentansprüche

1. Förderband aus elastischem Natur- oder Kunstfasergewebe für den Einsatz in einer Stollmaschine zum Weichmachen von gegerbtem Leder, die Zufuhrwalzen für das Förderband aufweist, **gekennzeichnet durch** Fasern aus leitfähigem Material, die schraubenförmig um die elastischen Fasern gewickelt sind in der Kette und/oder im Schuss, um die Entladung der **durch** das Band oder **durch** die auf dem Band beförderten Gegenstände angesammelten statischen Elektrizität über den unmittelbaren Kontakt zwischen dem Förderband und den Zufuhrwalzen zu erlauben.

2. Förderband gemäß Patentanspruch 1, wobei das leitfähige Material Kupfer, Aluminium, Titan und/oder Kohlenstoff enthält.

3. Stollmaschine mit zwei übereinander liegenden Förderbändern gemäß Patentanspruch 1 oder 2, zwischen denen das zu behandelnde Leder während des Stollprozesses zusammengedrückt wird.

## Revendications

1. Bande transporteuse composée de matière élastique de fibres naturelles ou synthétiques pour une fonceuse pour adoucir du cuir tanné ayant des rouleaux d'alimentation pour ladite bande transporteuse **caractérisée par** des fibres de matériel de conduction enroulé en hélice autour desdites fibres élastiques dans la trame et/ou la chaîne pour permettre la décharge de l'électricité statique accumulée par ladite bande ou par les objets transportés par ladite bande au moyen du contact direct de ladite bande transporteuse avec lesdits rouleaux d'alimentation.

2. Bande transporteuse selon la revendication 1, où ledit matériel de conduction contient du cuivre, de l'aluminium, du titane et/ou du charbon.

3. Fonceuse comprenant deux bandes transporteuses superposées selon les revendications 1 ou 2 entre lesquelles le cuir à traiter est comprimé durant le processus de perchage.
